# EUROPEAN PATENT SPECIFICATION

(11) **EP 0 595 271 B1**
(45) Date of publication and mention of the grant of the patent: **05.01.2000**
(21) Application number: 93117356.1
(22) Date of filing: 26.10.1993
(51) Int. Cl.: G01C 15/00

(54) **Laser beam irradiation apparatus**
Bestrahlungsvorrichtung mit Laserstrahl
Appareil d'irradiation à faisceau laser

(30) Priority: 27.10.1992 JP 28904292
(43) Date of publication of application: 04.05.1994
(73) Proprietor: TOPCON CORPORATION, Tokyo (JP)
(72) Inventor: Ohtomo, Fumio, c/o Topcon Corporation, Tokyo (JP); Nishizawa, Hiroyuki, Topcon Corporation, Tokyo (JP); Kodaira, Jun-ichi, Topcon Corporation, Tokyo (JP); Yoshino, Kenichirou, Topcon Corporation, Tokyo (JP)
(74) Representative: Müller-Boré & Partner Patentanwälte

(56) References cited:
- EP-A- 0 457 548
- US-A- 3 823 313
- US-A- 4 293 218
- PATENT ABSTRACTS OF JAPAN vol. 15, no. 300 (P-1232)30 July 1991 & JP-A-03 105 207 (HITACHI KIDEN KOGYO LTD.) 2 May 1991

## Description

### BACKGROUND OF THE INVENTION

### I. FIELD OF THE INVENTION

The present invention relates to laser rotative irradiation apparatuses having reciprocating laser scanning systems, and in particular relates to ones which are laser rotation apparatuses or rotative irradiation type laser apparatuses for inking used it by making a projected position of a laser beam projected to an object as a basis, and including the reciprocating laser scanning system.

### II. DESCRIPTION OF THE PRIOR ART

Conventionally, the rotative irradiation type laser apparatus is disclosed in Japanese Patent Application Laid Opens No.SHO-62-95419 (1987) and No.SHO-63-179208 (1988). These apparatuses use He-Ne gas lasers or laser diodes or the like as a laser source.

The conventional rotative irradiation type laser apparatuses using He-Ne gas laser has had a problem that, when a distance between the apparatus body and an object is long, inking operation with a high efficiency comes difficult because the He-Ne gas laser arriving to the object attenuates in energy and hardly recognize it.

In addition, the rotative irradiation type laser apparatuses using laser diodes project an infrared laser beam, this requires an arrangement of the infrared light sensor on the object.

In the recent years, a laser diode capable of oscillating visual wavelength laser whose wavelength approximates that of the He-Ne gas laser has been proposed. However, the problem still remains wherein, when a distance between the apparatus body and an object is long, the inking operation with a high efficiency is difficult because the energy of laser beam arriving to the object attenuates and hardly recognized it.

From EP-A-0 457 548 there is known a position sensing system including a laser beam irradiation apparatus according to the preamble of claim 1. In particular as stated on page 4, lines 5 and 7, the laser beam scans at substantially constant rotating angular velocity.

One of the drawbacks and shortcomings of the prior art results in a poor visual recognition of the laser beam. Accordingly, it is an object of the invention to provide easy fast and reliable visual recognition.

According to the invention this object is solved by an apparatus having the features of claim 1. Preferred embodiments are defined in the dependent subclaims. In particular according to the invention the scanning at rotational speed can be controlled, in particular between a search and a scanning speed in combination with a reverse of the scanning direction and/or the pausing of the scanning based on the output from the laser beam detecting means. Thus, a substantial energy on the object can be raised.

A laser rotative irradiation apparatus for rotatably irradiating a laser beam by a rotation device, laser rotative irradiation apparatus having a reciprocating laser scanning system preferably includes a reflection means for reflecting a laser beam, a laser beam detecting means for detecting a return laser beam reflected from said reflection means, and a control means for controlling rotation of said rotation device in accordance with an output of said laser beam detecting means.

### BRIEF DESCRIPTION OF THE DRAWINGS

Fig. 1 is an optical diagram of a laser beam rotation apparatus having a reciprocating laser scanning system of an embodiment according to the present invention;
Fig. 2 is a front view of a reflection means of an embodiment according to the present invention;
Fig. 3 is a front view of a reflection means of an embodiment according to the present invention;
Fig. 4 is a sectional view of a reflection means of an embodiment according to the present invention;
Fig. 5 is a sectional view of a reflection means of an embodiment according to the present invention;
Fig. 6 is a block diagram of a control system of the embodiment 1 according to the present invention;
Fig. 7 is a circuit diagram of a chattering preventing unit of an embodiment according to the present invention;
Fig. 8 is a block diagram of a control system of the embodiment 2 according to the present invention;
Fig. 9 is a flow chart of a microcomputer for control system of the embodiment 2 according to the present invention;
Fig. 10 is a block diagram of a control system of the embodiment 3 according to the present invention;
Fig. 11 is a block diagram of a control system of the embodiment 4 according to the present invention;
Fig. 12 is a flow chart of a microcomputer for control system of the embodiment 4 according to the present invention;
Fig. 13 is a flow chart of a microcomputer for control system of the embodiment 5 according to the present invention; and
Fig. 14 is a flow chart of a microcomputer for control system of the embodiment 6 according to the present invention.

### DETAILED DESCRIPTION OF THE PREFERRED EMBODIMENTS

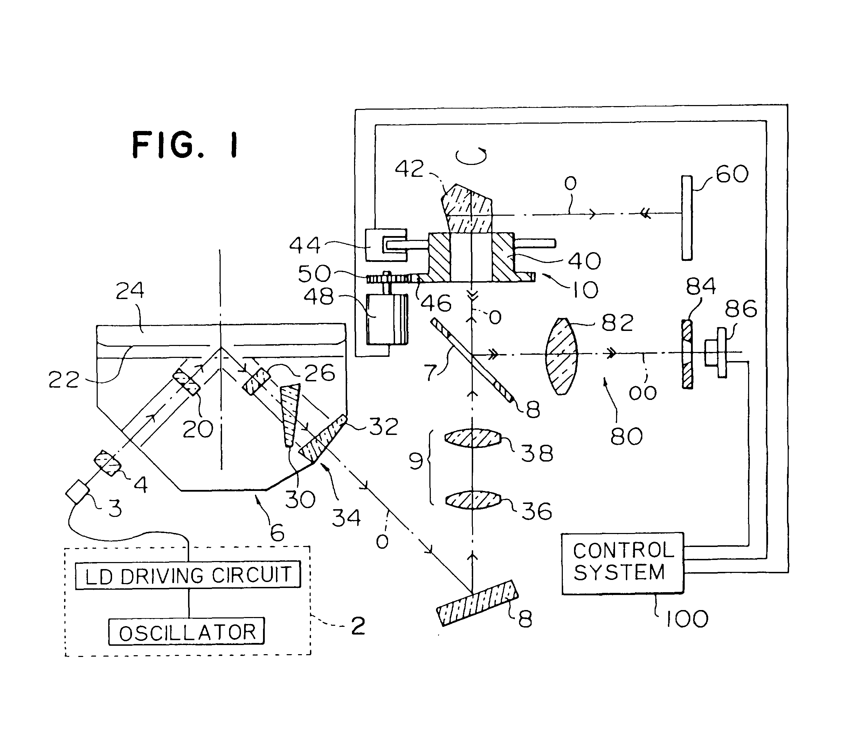

As shown in Fig. 1, a laser beam rotation apparatus having an optical system of reciprocating laser scanning system is constituted by arranging, a collimator lens 4 on an optical axis O of laser beam irradiated from a LD light emitting section 2, a tilting angle compensating section 6, a reflection mirror 8, a beam expander 9, a perforated mirror 8 having a hole 7 for passing the optical axis O, and a beam rotation system 10. The tilting angle compensation section 6 may be omitted from the optical system of reciprocating laser scanning system.

The tilting angle compensating section 6 is a part of the optical system for reflecting a laser beam radiated from the laser beam source 2 so that it is always maintained perpendicularly irrespective of tilting angle of the main body (not shown), which comprises a seal glass 20, an oil bath 24 having a reflection surface 22 of backside of liquid, a seal glass 26, and a pair of prism members 30 and 32. An optical axis adjusting section 34 and the beam expander 9 for polarizing an optical axis 0 are constituted by arranging a pair of lenses 36 and 38 having different focal lengths by putting a predetermined interval each other, and which expands a width of the laser beam.

The beam rotation section 10 of an optical system, which is arranged with a pentaprism 42 on a rotatable support table 40, reflects a laser beam injected in a perpendicular upper direction so that it is performed rotation scanning within a horizontal plane. An encoder 44 for detecting a rotating direction of the rotatable support table 40 is attached at a intermediate portion of the rotatable support table 40, the lower portion of which is provided with a gear 46 which engages with an output gear 50 of a motor 48 for driving the rotatable support table 40. The rotation of the motor 48 is controlled by a control system 100, and which is connected to an encoder 44 and a photoelectric conversion element 86 of a laser beam detecting system 80, which is described later.

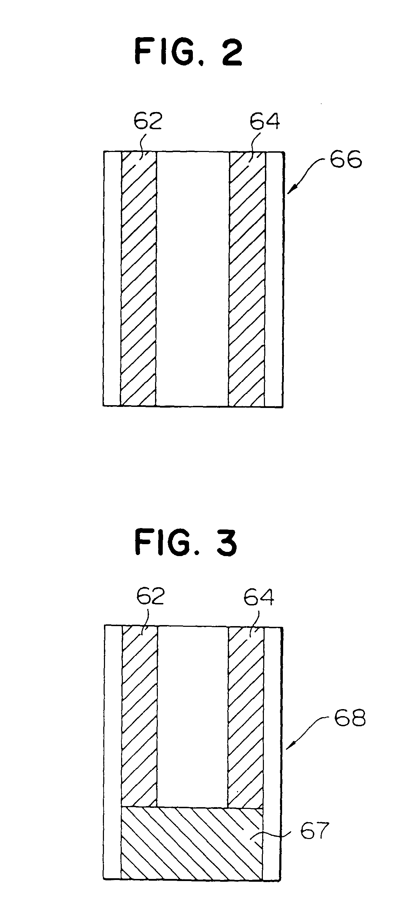

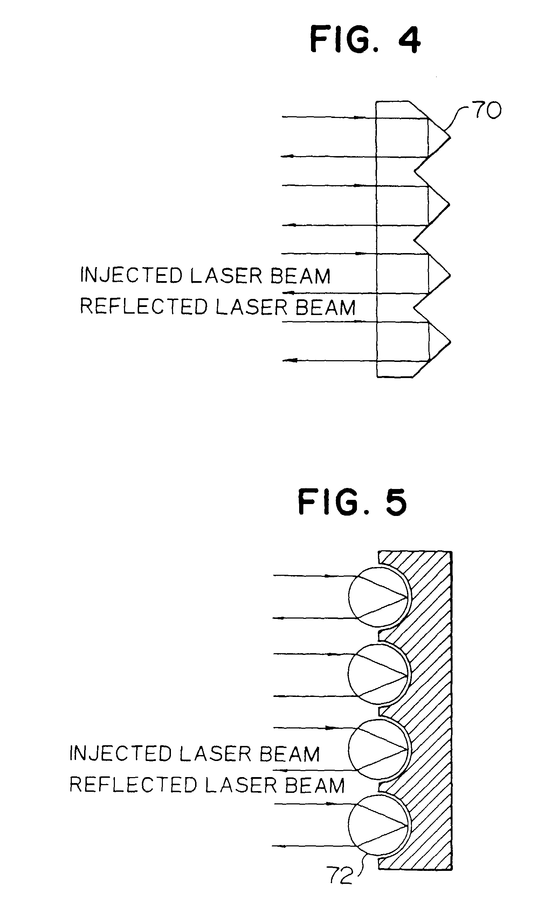

A reflection means 60 for reflecting a laser beam is arranged on the object to be measured. The reflection means 60 is, as shown in Fig. 2, a first reflection member 66 arranged with two reflecting zones 62 and 64 extending perpendicular by leaving a space between them, or as shown in Fig. 3, a second reflecting member 68 arranged with two perpendicular reflection zones 62 and 64 extending perpendicular by leaving a space between them and bottom portions thereof are provided with another-patterned reflecting zone 67. The reflecting zones 62 and 64 and the reflecting zone 67 are provided on their backsides with a plurality of corner cubes 70 as shown in Fig. 4, or with a plurality of spherical reflectors 72 as shown in Fig. 5.

The laser beam detecting system 80 is formed by arranging a condenser lens 82, a pinhole plate 84, and the photoelectric conversion element 86 by leaving a suitable interval each other on a reflection optical axis 00 of the perforated mirror 8.

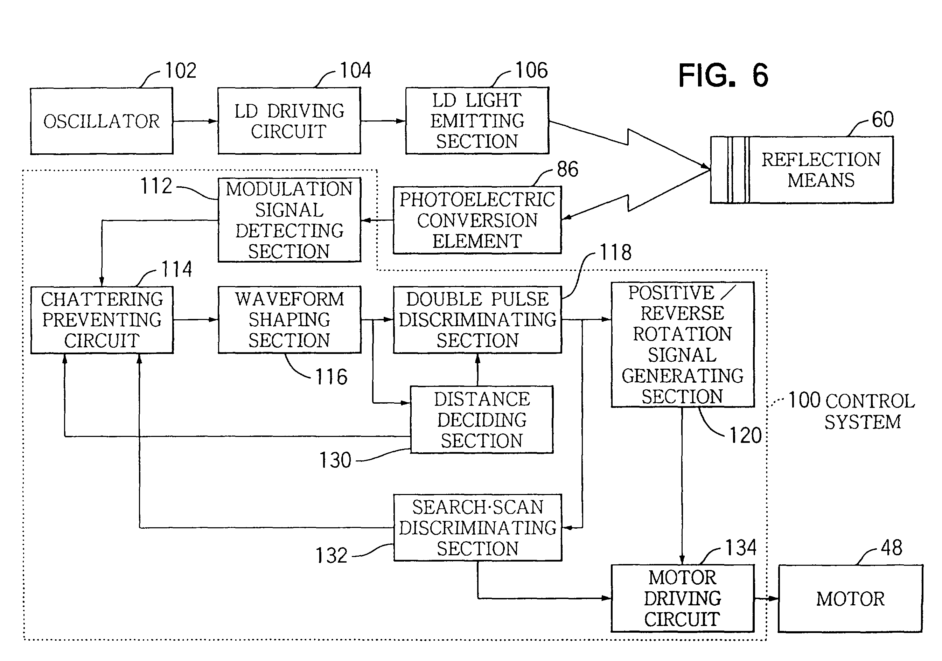

As shown in Fig. 6, an electrical system of the reciprocating laser scanning system includes an oscillator 102, a LD driving circuit 104 inputting an output of the oscillator 102, and a LD light emitting section 106 inputting an output of the LD driving circuit 104. The electrical system further includes the photoelectric conversion element 86 receiving a laser beam reflected from the reflecting means 60, the motor 48, and a control system 100. There is also an arrangement wherein an output of the encoder 44 is input to the control system 100.

### CONTROL SYSTEM OF EMBODIMENT 1

The control system 100 of the embodiment 1 has a constitution to make visual recognition of the laser beam easy by making the laser beam reciprocating scan only in an angle range of the two reflecting means 60. As shown in Fig. 6, the control system 100 includes a modulation signal detecting section 112 connected with the output of the photoelectric conversion element 86 and for amplifying input signals, and a chattering preventing circuit 114 connected with the output of the modulation signal detecting section 112.

The output of the chattering preventing circuit 114 is connected to a motor driving circuit 134 through a waveform shaping section 116, a double pulse discriminating section 118 and a positive / reverse rotation signal generating section 120. The output of the waveform shaping section 116 is connected through a distance discriminating section 130 to the double pulse discriminating section 118. The output of the double pulse discriminating section 118 is connected to the motor driving circuit 134 through a search. scan discriminating section 132. The outputs of the distance discriminating section 130 and the search scan scan discriminating section 132 are connected to the chattering preventing circuit section 114.

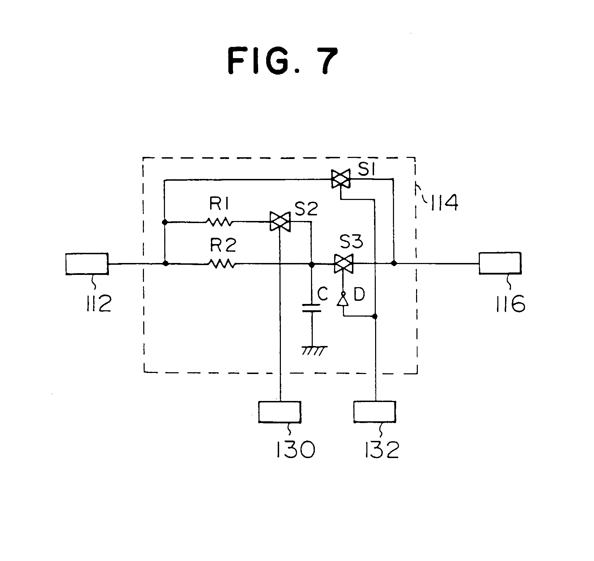

The chattering preventing circuit section 114 is the one for preventing occurrence of chattering by adjusting a time constant of a RC filter circuit, and which is composed of resistances R1 and R2, analog switches S1, S2, and S3, an inverter I, and a capacitor C as shown in Fig. 7. In the chattering preventing circuit 114, at the time of scanning between the reflection means 60, when the distance between the main body (not shown) and the object is short, a detecting signal becomes long and also a chattering time becomes long, thereby the time-constant for the RC filter circuit is made long. To the contrary, on scanning, when a distance between the main body (not shown) and the object is long, a detecting signal is short and also a chattering time becomes short, thereby the time-constant of the RC filter circuit is made short. On the other hand, at the time of searching that scanning on the reflection circuit 60, the time required for a laser beam to go across the reflection means 60 is short, and a possibility of generating chatterings of a return laser beam is less, hence the analog switches S1, S2, and S3 are operated so that the input signals bypass the RC filter circuit.

The distance discriminating section 130 discriminates a distance between the main body (not shown) and the object by an interval of double pulse signals generated by two perpendicular reflection zones 62 and 64 of the reflection means 60, and switches the time constant of the chattering preventing circuit 114. In the double pulse discriminating section 118, under the condition that the time between at the instant when the time from a first pulse is inputted until a second pulse is inputted is within a predetermined time set for searching or scanning and if it is determined to be the reflection means 60, one pulse is generated and its pulse signal is output to the positive / reverse rotation signal generating section 120 and the search scan scan discriminating section 132.

By output signals from the double pulse decision section 118, the search scan scan discriminating section 132 determines whether it is search or scan, its resultant pulse signals are outputted to the chattering preventing circuit 114. The positive / reverse rotation signal generating circuit 120, which is formed of a frequency dividing circuit, switches positive rotation signals and reverse rotation signals every time the signals discriminated as a reflection means 60 are inputted from the double pulse discriminating circuit 118 to output the signals to the motor driving circuit 134.

The motor driving circuit 134 controls the rotating direction of the motor 48 by positive rotation signals and reverse rotation signals from the positive / reverse rotation signal generating circuit 120, and controls the rotational speed by the signal whether it is search or scan from the search.scan decision section 132. That is, the control to make so that a rotational speed on search becomes faster than that on scan is carried out.

### CONTROL SYSTEM OF EMBODIMENT 2

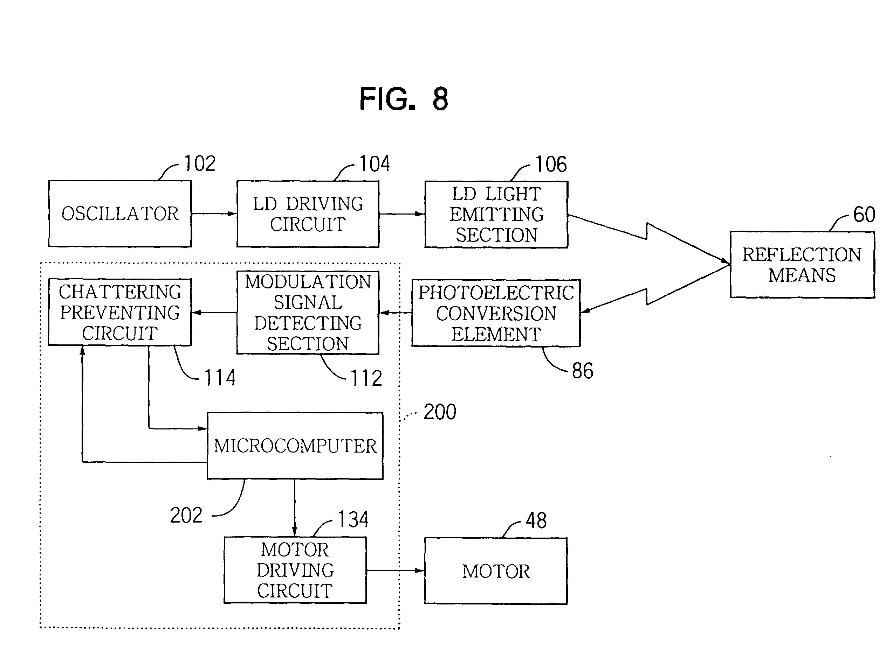

A control system 200 of the embodiment 2, as in the embodiment 1, facilitates visual recognition of a laser beam by reciprocating scanning the laser beam only in an angular range of the two reflection means 60. In the control system 200 in Fig. 8, the same reference numerals are given to the same constructions as those shown in the embodiment 1, the explanation thereof is omitted accordingly. The output of a chattering preventing circuit 114 is outputted to a motor driving circuit 134 through a microcomputer 202.

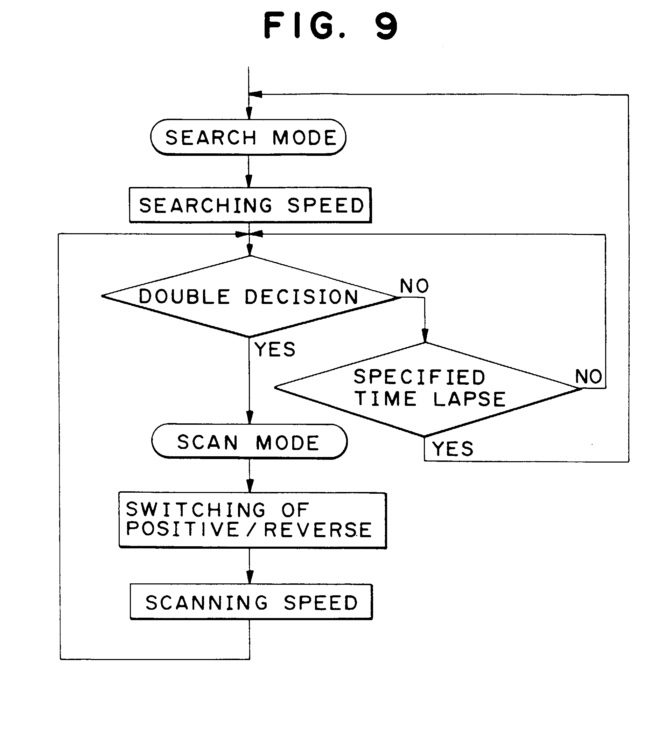

The microcomputer 202, when enters in a search mode, operates to make the beam rotation system 10 to a rotational speed of 60 rpm as shown in a flow chart of Fig. 9. Then, in a double pulse discriminating step, it is discriminated whether the input signal from the reflection means 60 is a double pulse or not.

If it is determined that it is a double pulse in the double pulse discriminating step, it is switched to a scan mode to switch a rotating direction of the motor 48, and to produce the rotational speed of the beam rotation system 10 is made a scan mode rotational speed which is slower than the rotational speed in search mode. If it is determined that it is not a double pulse, it is returned to the double pulse discriminating step if it is before the predetermined time lapses, and it is returned to the search mode if it is after the predetermined time lapses.

### CONTROL SYSTEM OF EMBODIMENT 3

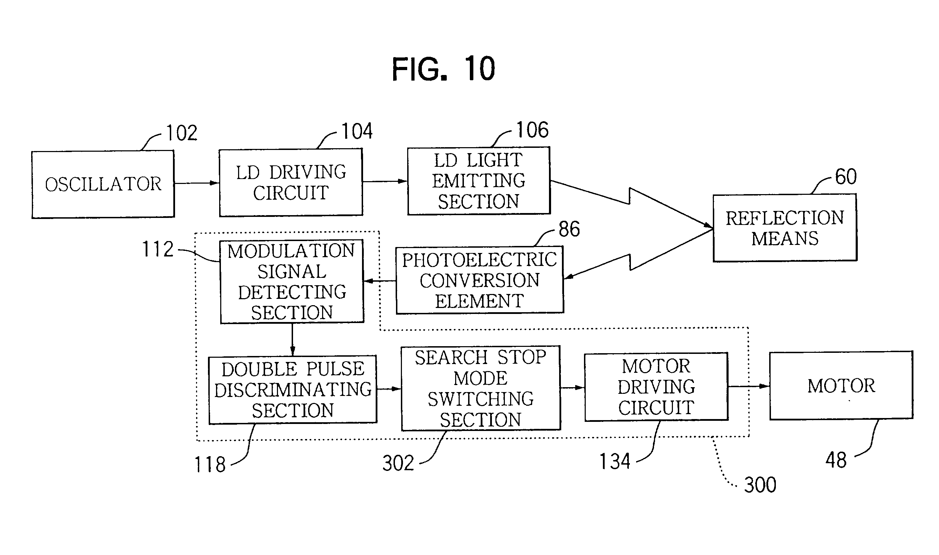

A control system 300 of the embodiment 3 facilitates visual recognition of a laser beam by stopping the laser beam on to the two reflection means 60. In the control system 300, as shown in Fig. 10, an output of a modulation signal detecting section 112 is inputted into a motor driving circuit 134 through a double pulse discriminating section 118 and a search. stop mode switching section 302. The search. stop mode switching section 302, when signals showing the fact that a double pulse is inputted from the double pulse discriminating section 118, outputs motor stop signals to the motor driving circuit 134 to stop the rotation of the beam rotation system 10 during a predetermined time.

### CONTROL SYSTEM OF EMBODIMENT 4

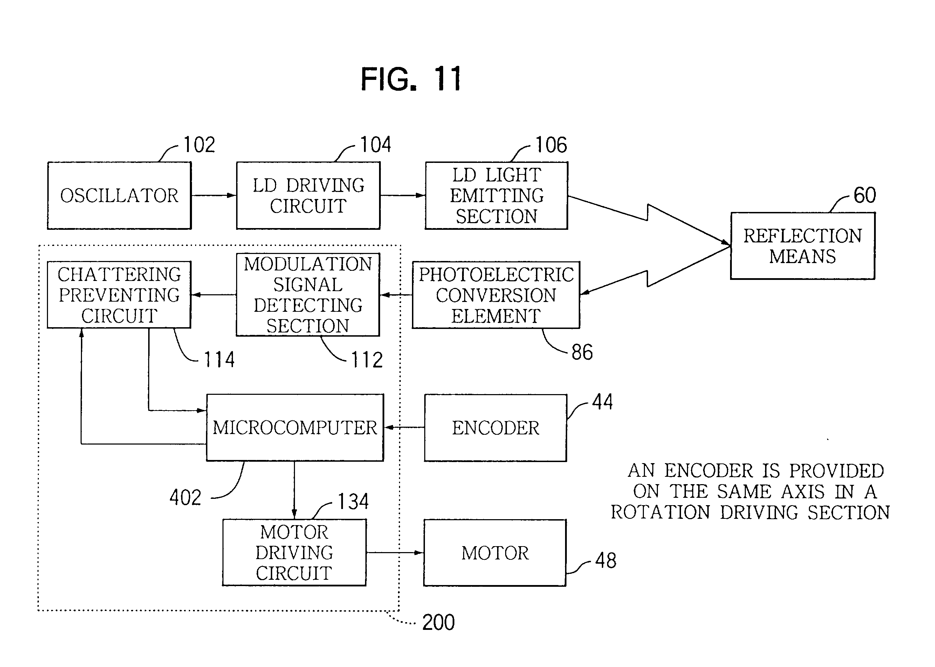

A control system 400 of the embodiment 4, as in the embodiment 3, facilitates visual recognition of a laser beam by stopping the laser beam on to the two reflection means 60. In the control system 400, as shown in Fig. 11, the same reference numerals are given to the same constructions as those shown in the embodiment 1, and the explanation thereof is omitted accordingly. The output of the chattering preventing circuit 114 is outputted to the motor driving circuit 134 through a microcomputer 402. An output of an encoder 44 is inputted the microcomputer 402.

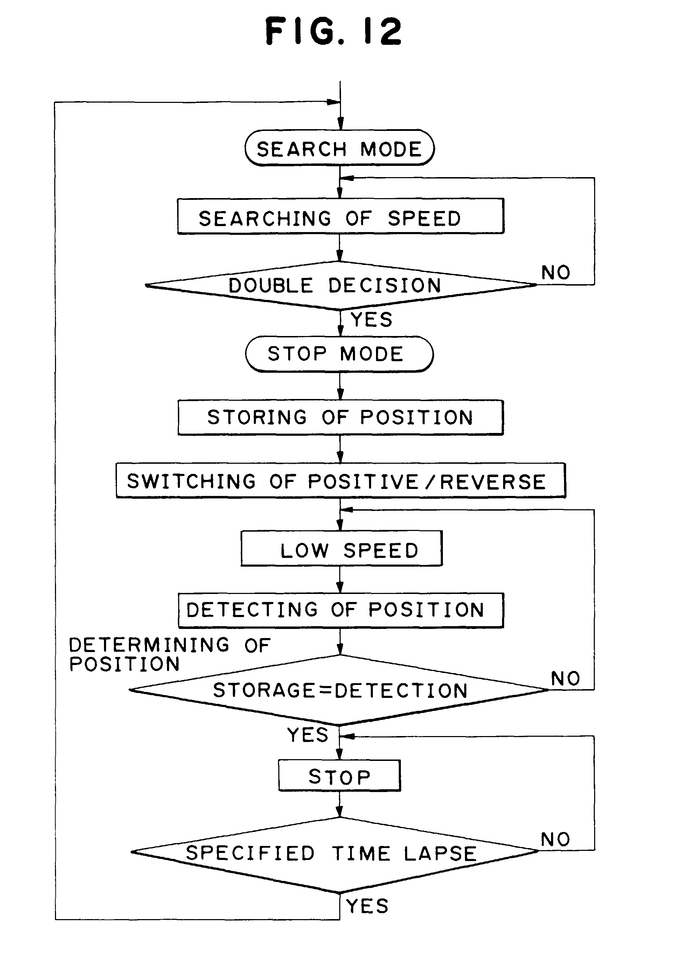

The microcomputer 402 of the control system 400, when enters in a search mode, operates to make the beam rotation system 10 to a rotational speed of 60 rpm as shown in a flow chart of Fig. 12. Then, in the double pulse decision step, it is determined whether an input signal from the reflection means 60 is a double pulse or not.

In the double pulse decision step, if it is determined that it is a double pulse, the rotating direction of the beam rotation system 10 at that time is stored in accordance with the output of the encoder 44. Next, the rotating direction of the beam rotation system 10 is switched to make it slower rotational speed than in the search mode, and have the beam rotation system 10 perform low speed reverse rotation to return it up to the said stored position and to stop during a predetermined time. After the beam rotation system 10 has been stopped during predetermined time, the search mode is started. In the double pulse discriminating step, if it is not a double pulse, it is returned to the search mode.

### CONTROL SYSTEM OF EMBODIMENT 5

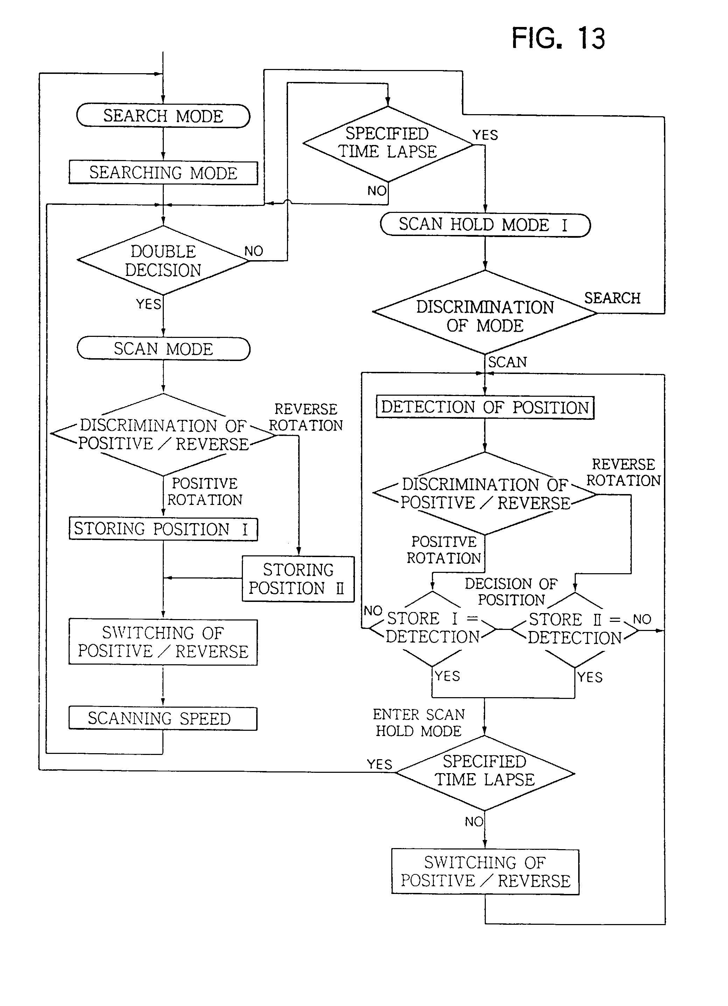

A control system of the embodiment 5, as in the embodiment 1, facilitates visual recognition of a laser beam by reciprocating scanning the laser beam only in an angular range of the two reflection means 60. However, it is constituted that the angular positions of the two reflection means 60 are being stored and the reciprocating scanning of the laser beam is temporarily continued even if the reflection means 60 are removed or the return laser beam is temporarily interrupted. The control system of the embodiment 5 is the same as in the embodiment 4 except of the operation of the microcomputer 402. A microcomputer of the embodiment 5, as shown in Fig. 13, when it enters into the search mode, operates to make the beam rotation system 10 to a rotational speed of search speed 60 rpm. Next, in the double pulse discriminating step, it is determined whether input signals from the reflection means 60 are double pulses or not.

If it is determined that it is a double pulse in the double pulse discriminating step, it is proceeded to a positive / reverse discriminating step. In either case of positive or reverse decision in the positive / reverse discriminating step, the rotative positions I and II of the beam rotation system 10 at that time are stored in accordance with the output of the encoder 44. Thereafter, the rotation direction of the beam rotation system 10 is switched to rotate the beam rotation system 10 with the scan mode in low rotational speed .

In the double pulse discriminating step, if it is determined that input signals from the reflection means 60 are not double pulse and further a predetermined time has lapsed, then it is proceeded to a scan hold mode I. If it is determined that the predetermined time has not yet lapsed, it is returned to the double pulse discriminating step. The scan hold mode I is the step returning to the search mode after the scanning of the angular ranges of the two reflection means 60 memorized in the end during the scan mode has been continued during a predetermined time. That is, in the mode decision step, if it is determined that it is a scan mode, the rotation direction and rotation position of the beam rotation system 10 are detected in accordance with the output of the encoder 44.

Then, in positive / reverse discriminating step, if it is determined that it is a positive rotation, the rotation position of the beam rotation system 10 is compared with the rotation position I, and if it is determined that it is a reverse rotation, then the rotation position of the beam rotation system 10 is compared with the rotation position II. When these two positions are coincident to each other, it is entered into the scan hold mode I, and it is determined whether or not a predetermined time has lapsed. If it is determined that the predetermined time has lapsed, it is returned to the search mode, and if it is determined that the predetermined time has not yet lapsed, it is returned to the step for detecting the rotation direction ion and rotation position of the beam rotation system 10 in accordance with the output of the encoder 44 by switching the positive / reverse rotating directions. If the beam rotation system 10 is determined to be in positive rotation, then its rotational position is compared to the rotation position I, and if it is determined that it is a reverse rotation direction, then the rotation direction and rotation position of the beam rotation system 10 are compared to the rotation position II, and if these are not coincided to it, it is returned to the step for detecting the rotation direction and the rotation position of the beam rotation system 10 in accordance with the output of the encoder 44.

### CONTROL SYSTEM OF EMBODIMENT 6

A control system of the embodiment 6, as in the embodiment 1, facilitates visual recognition of a laser beam by reciprocating scanning the laser beam only in an angular range of the two reflection means 60. In this arrangement, if the double pulses have not been detected during scanning, it moves to the search mode, and if a single pulse has been detected, it proceeds to the scan hold made II. The scan hold mode II stores the angular position of the two reflection means 60 to scan within said angular range unless it advances to the scan mode by detecting the double pulse. The double pulse is detected by an interrupt operation because it is not clear that where the double pulses generate during the flow of the scan hold mode II.

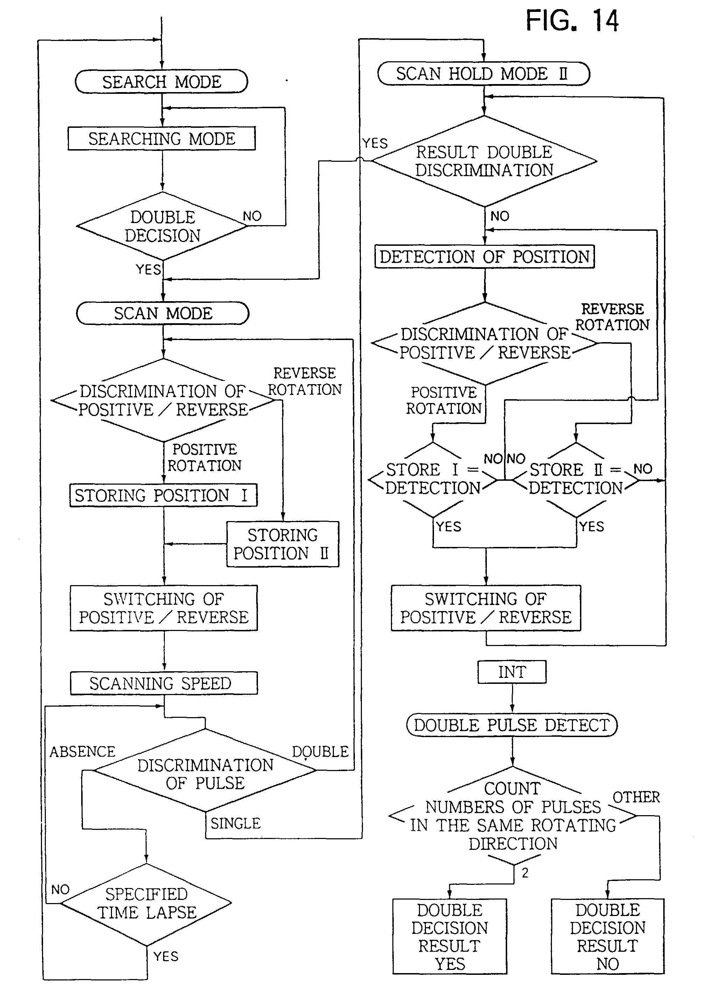

That is, as shown in the lower right flow chart of Fig. 14, in the scan hold mode II, under the condition where reciprocating laser scanning is performed, in the case where signals by a reflection light from the two reflection means are detected within the time that the motor rotates in the same direction, making the double discriminating result to be YES, and when it is other than that, deciding it to be NO, and it executes the interrupt-process that such decision results are carried out depending on the double decision result of the scan hold mode II. The control system of the embodiment 6 is the same as the embodiment 4 except of operation of the microcomputer 402. The microcomputer of the embodiment 6 operates, as shown in Fig. 14, when entering in the search mode, to make the rotational speed of the beam rotation system 10 to a search speed of 60 rpm. Next, in the double pulse discriminating step, it is determined whether or not input signals from the reflection means 60 are the double pulses.

In the double pulse discriminating step, if it is determined to be a double pulse, it proceeds to the positive / reverse reverse discriminating step. In either decision in the positive / discriminating step, the rotational positions I and II of beam rotation system 10 at that time are stored in accordance with the output of the encoder 44. Thereafter, the rotating direction of the beam rotation system 10 is switched to rotate the beam rotation system 10 in the scan mode having a lower rotational speed.

Following this, a pulse decision is performed in the pulse discriminating step. If no pulse is detected in the pulse discriminating step and a predetermined time has lapsed, it returns to the search mode. If no pulse is detected and the predetermined time has not lapsed, it returns to the pulse discriminating step. If a single pulse is detected in the pulse discriminating step, it proceeds to the scan hold mode II.

If a double pulse is detected in the pulse discriminating step, it proceeds to the positive / reverse discriminating step.

A double pulse discrimination is executed in the scan hold mode II. If it is determined that it is not a double pulse, the rotation direction and rotation position of the beam rotation system 10 are detected in accordance with the output of the encoder 44. In the positive / reverse discriminating step, if it is determined to be positive rotation, the rotation position of the beam rotation system 10 is compared with said rotation position I, and it is determined to be reverse rotation, the rotation position of the beam rotation system 10 is compared with said rotation position II. If these are coincident to each other, positive / reverse rotating direction is switched to returns to the step where the double pulse discrimination is executed.

Since the present invention is constituted as explained above, by performing the controls for reducing, stopping or reciprocating the scanning speed on the object of the laser beam, a substantial energy of the laser beam on the object can be raised, thereby the visual recognition of said laser beam becomes easy.

In the embodiments of the present invention, even if the reflection means becomes not existing at a predetermined position, by continuing the laser beam projection until the predetermined time lapses, the operation on visual recognition of the laser beam can effectively be performed. In addition, by using a modulated laser beam, by arranging pinhole diaphragm in a detecting system for the return laser beam, or by using reflection members having a high directivity, have less-noise signals inject, and a stable operation can be maintained.

Further, a returning light from the reflection means and a reflection light from the external reflection object are distinguished and wrong operations can be prevented by having at least two reflection members are included inside the reflection means. In addition, the laser beam injecting means and the laser beam detecting means have partially a common optical system, and further perforated mirrors are arranged in the common optical system, thereby the laser rotative irradiation apparatus having a simplified construction and a compact size can be obtained.

## Claims

1. A laser beam irradiation apparatus comprising
a laser source (2) for emitting a laser beam;
laser beam projecting means (6, 8) for projecting the laser beam;
rotary scanning means (10) for moving said laser beam projecting means and scanning the laser beam along a laser scanning path;
reflecting means (60) having at least one reflection zone (62, 64) for reflecting an incident laser beam projected by said projecting means; and
laser beam detecting means (80) for detecting a return laser beam reflected from the reflecting means (60) and producing an output based on detection of the return laser beam;
characterized by control means (100, 200, 300, 400) for reversing said scanning and/or pausing the scanning of the laser beam on said reflecting means (60) based on said output from said laser beam detecting means.

2. The apparatus of claim 1, further comprising memory means for storing the direction of movement of said scanning means when it produces the output based on detection of the return laser beam; said control means (100, 200, 300, 400) considering the direction stored in said memory means.

3. The apparatus of claims 1 or 2, wherein said reflecting means (60) reflect an incident laser beam projected by said projecting means in a direction substantially parallel to the incident laser beam.

4. The apparatus according to anyone of claims 1,2 or 3, wherein said control means functions to reverse the rotation of said scanning means and/or pause the scanning of the laser beam on said reflecting means (60) in accordance with said output of said laser beam detecting means when said laser beam detecting means (80) detects two pulses reflected from said reflection means.

5. The apparatus according to anyone of claims 1, 2, 3 or 4, wherein said laser source emits a visible light.

6. The apparatus according to anyone of claims 1, 2, 3, 4 or 5, wherein said at least one reflection zone has a high directivity.

7. The apparatus according to anyone of claims 1, 2, 3, 4, 5 or 6, wherein said reflection means includes at least two reflection zones or members.

8. The apparatus of claim 7, wherein said control means reverses the direction of rotation of said rotary means when said laser beam detecting means receives the return laser beam reflected from said first and second reflection members, whereby the laser beam scans reciprocally on an angle width which includes said first and second reflection members.

9. The apparatus according to anyone of claims 1-8, wherein the speed of said scanning means can be changed between a search mode and a scan mode, in particular between first and second rotational speeds, wherein the second rotational speed is slower than the first one.

10. The apparatus according to anyone of claims 1-9, wherein the control means maintains the control state at the time when the output has existed even if the output from the laser beam detecting means is missing.

11. The apparatus according to anyone of claims 1-10, wherein the laser beam projected by said projecting means is modulated, and wherein said laser beam detecting means functions to demodulate the laser beam.

12. The apparatus according to anyone of claims 1-11, wherein said laser beam detecting means includes a pinhole diaphragm.

13. The apparatus according to anyone of claims 1-11, wherein said laser beam detecting means and said laser beam projection means have a portion in common.

14. The apparatus of claim 12, wherein said portion includes a perforated mirror.

## Patentansprüche

1. Laserstrahl-Bestrahlungsvorrichtung, umfassend:
eine Laserquelle (2) zum Aussenden eines Laserstrahls;
Laserstrahl-Projektionseinrichtungen (6, 8) zur Projektion des Laserstrahls;
rotierende Scan- bzw. Abtasteinrichtungen (10) zur Bewegung der Laserstrahl-Projektionseinrichtungen und zum Abtasten bzw. Scannen des Laserstrahls entlang eines Laserabtastwegs;
Reflexionseinrichtungen (60), welche wenigstens eine Reflexionszone (62, 64) zur Reflexion eines einfallenden Laserstrahls, welcher durch die Projektionseinrichtungen projiziert wird, aufweisen; und
Laserstrahl-Detektionseinrichtungen (80) zur Detektion eines rückkehrenden Laserstrahls, welcher von den Reflexionseinrichtungen (60) reflektiert ist, und Erzeugung einer Ausgabe basierend auf der Detektion des rückkehrenden Laserstrahls;
gekennzeichnet durch Regel- bzw. Steuereinrichtungen (100, 200, 300, 400) zur Regelung bzw. Steuerung der Geschwindigkeit der Abtasteinrichtungen (10) und zum Umkehren des Abtastens und/oder Unterbrechen des Abtastens des Laserstrahls auf den Reflexionseinrichtungen (60) basierend auf der Ausgabe der Laserstrahl-Detektionseinrichtungen.

2. Vorrichtung nach Anspruch 1, weiters umfassend Speichereinrichtungen zum Speichern der Bewegungsrichtung der Abtasteinrichtungen, wenn diese die Ausgabe basierend auf der Detektion des rückkehrenden Laserstrahls erzeugt, wobei die Regel- bzw. Steuereinrichtungen (100, 200, 300, 400) die in den Speichereinrichtungen gespeicherte Richtung berücksichtigen.

3. Vorrichtung nach Anspruch 1 oder 2, worin die Reflexionseinrichtungen (60) einen einfallenden Laserstrahl reflektieren, welcher durch die Projektionseinrichtungen in einer Richtung im wesentlichen parallel zu dem einfallenden Laserstrahl projiziert ist.

4. Vorrichtung nach einem der Ansprüche 1, 2 oder 3, worin die Steuer-bzw. Regeleinrichtungen funktionieren, um in Übereinstimmung mit der Ausgabe der Laserstrahl-Detektionseinrichtungen die Drehbewegung der Abtasteinrichtungen umzukehren und/oder das Abtasten des Laserstrahls auf den Reflexionseinrichtungen (60) unterbrechen, wenn die Ausgabe der Laserstrahl-Detektionseinrichtungen (80) zwei von den Reflexionseinrichtungen reflektierte Pulse detektiert.

5. Vorrichtung nach einem der Ansprüche 1, 2, 3 oder 4, worin die Laserquelle ein sichtbares Licht emittiert.

6. Vorrichtung nach einem der Ansprüche 1, 2, 3, 4 oder 5, worin die wenigstens eine Reflexionszone eine hohe Richtfähigkeit bzw. Richtwirkung aufweist.

7. Vorrichtung nach einem der Ansprüche 1, 2, 3, 4, 5 oder 6, worin die Reflexionseinrichtungen wenigstens zwei Reflexionszonen oder -elemente beinhalten.

8. Vorrichtung nach Anspruch 7, worin die Steuer- bzw. Regeleinrichtungen die Rotationsrichtung der Rotationseinrichtungen umkehrt, wenn die Laserstrahl-Detektionseinrichtungen den rückkehrenden Laserstrahl empfangen, welcher von den ersten und zweiten Reflexionselementen reflektiert wird, wodurch der Laserstrahl hin- und hergehend über eine Winkelbreite abtastet, welche die ersten und zweiten Reflexionselemente beinhaltet.

9. Vorrichtung nach einem der Ansprüche 1 bis 8, worin die Geschwindigkeit der Abtasteinrichtungen zwischen einem Suchmodus und einem Abtastmodus, insbesondere zwischen ersten und zweiten Rotationsgeschwindigkeiten bzw. -drehzahlen, geändert werden kann, wobei die zweite Rotationsgeschwindigkeit langsamer ist als die erste.

10. Vorrichtung nach einem der Ansprüche 1 bis 9, worin die Regel- bzw. Steuereinrichtungen den Regel- bzw. Steuerzustand zu der Zeit beibehalten, zu welcher die Ausgabe vorlag, selbst wenn die Ausgabe von den Laserstrahl-Detektionseinrichtungen fehlt.

11. Vorrichtung nach einem der Ansprüche 1 bis 10, worin der Laserstrahl, welcher durch die Projektionseinrichtungen projiziert wird, moduliert ist und worin die Laserstrahl-Detektionseinrichtungen zur Demodulation des Laserstrahls dienen.

12. Vorrichtung nach einem der Ansprüche 1 bis 11, worin die Laserstrahl-Detektionseinrichtungen eine Lochmembran beinhalten.

13. Vorrichtung nach einem der Ansprüche 1 bis 11, worin die Laserstrahl-Detektionseinrichtungen und die Laserstrahl-Projektionseinrichtungen einen Abschnitt gemeinsam aufweisen.

14. Vorrichtung nach Anspruch 13, worin der Abschnitt einen perforierten Spiegel beinhaltet.

## Revendications

1. Dispositif d'irradiation à faisceau laser, comprenant :
une source laser (2) pour émettre un faisceau laser ; des moyens de projection de faisceau laser (6, 8) pour projeter le faisceau laser ;
des moyens de balayage rotatif (10) pour déplacer lesdits moyens de projection de faisceau laser et pour balayer le faisceau laser le long d'un chemin de balayage de laser ;
des moyens de réflexion (60) ayant au moins une zone de réflexion (62, 64) pour réfléchir un faisceau laser incident projeté par lesdits moyens de projection ; et
des moyens de détection de faisceau laser (80) pour détecter un faisceau laser de retour réfléchi en provenance des moyens de réflexion (60) et pour produire une sortie sur la base de la détection du faisceau laser de retour ;
caractérisé par des moyens de commande (100, 200, 300, 400) pour inverser ledit balayage et/ou pour interrompre le balayage du faisceau laser sur lesdits moyens de réflexion (60) sur la base de ladite sortie en provenance desdits moyens de détection de faisceau laser.

2. Dispositif selon la revendication 1, comprenant de plus des moyens de mémoire pour stocker le sens de déplacement desdits moyens de balayage quand ils produisent la sortie sur la base de la détection du faisceau laser de retour ; lesdits moyens de commande (100, 200, 300, 400) considérant le sens stocké dans lesdits moyens de mémoire.

3. Dispositif selon les revendications 1 ou 2, dans lequel lesdits moyens de réflexion (60) réfléchissent un faisceau laser incident projeté par lesdits moyens de projection dans un sens sensiblement parallèle au faisceau laser incident.

4. Dispositif selon l'une quelconque des revendications 1, 2 ou 3, dans lequel lesdits moyens de commande fonctionnent pour inverser la rotation desdits moyens de balayage et/ou pour interrompre le balayage du faisceau laser sur lesdits moyens de réflexion (60) selon ladite sortie desdits moyens de détection de faisceau laser quand lesdits moyens de détection de faisceau laser (80) détectent deux impulsions réfléchies en provenance desdits moyens de réflexion.

5. Dispositif selon l'une quelconque des revendications 1, 2, 3 ou 4, dans lequel ladite source laser émet une lumière visible.

6. Dispositif selon l'une quelconque des revendications 1, 2, 3, 4 ou 5, dans lequel ladite au moins une zone de réflexion a une directivité élevée.

7. Dispositif selon l'une quelconque des revendications 1, 2, 3, 4, 5 ou 6, dans lequel lesdits moyens de réflexion comprennent au moins deux zones ou éléments de réflexion.

8. Dispositif selon la revendication 7, dans lequel lesdits moyens de commande inversent le sens de rotation desdits moyens rotatifs quand lesdits moyens de détection de faisceau laser reçoivent le faisceau laser de retour réfléchi en provenance desdits premier et second éléments de réflexion, de sorte que le faisceau laser balaye par va et vient sur une largeur angulaire qui comprend lesdits premier et second éléments de réflexion.

9. Dispositif selon l'une quelconque des revendications 1 à 8, dans lequel la vitesse desdits moyens de balayage peut être modifiée entre un mode de recherche et un mode de balayage, en particulier entre des première et seconde vitesses de rotation, dans lequel la seconde vitesse de rotation est plus lente que la première.

10. Dispositif selon l'une quelconque des revendications 1 à 9, dans lequel les moyens de commande maintiennent l'état de commande au moment où la sortie a existé même si la sortie en provenance des moyens de détection de faisceau laser est manquante.

11. Dispositif selon l'une quelconque des revendications 1 à 10, dans lequel le faisceau laser projeté par lesdits moyens de projection est modulé, et dans lequel lesdits moyens de détection de faisceau laser fonctionnent pour démoduler le faisceau laser.

12. Dispositif selon l'une quelconque des revendications 1 à 11, dans lequel lesdits moyens de détection de faisceau laser comprennent une membrane à minuscule ouverture.

13. Dispositif selon l'une quelconque des revendications 1 à 11, dans lequel lesdits moyens de détection de faisceau laser et lesdits moyens de projection de faisceau laser ont une partie en commun.

14. Dispositif selon la revendication 12, dans lequel ladite partie comprend un miroir perforé.
